# EUROPÄISCHE PATENTSCHRIFT

(11) **EP 0 634 063 B1**
(45) Veröffentlichungstag und Bekanntmachung des Hinweises auf die Patenterteilung: **24.07.1996**
(21) Anmeldenummer: 93905153.8
(22) Anmeldetag: 26.02.1993
(51) Int. Cl.: H02B 13/075

(54) **ERDUNGSSCHALTER FÜR EINE DRUCKGASISOLIERTE, METALLGEKAPSELTE HOCHSPANNUNGSSCHALTANLAGE**
EARTHING SWITCH FOR METAL-CLAD HIGH-VOLTAGE SWITCHGEAR INSULATED WITH COMPRESSED GAS
INTERRUPTEUR DE MISE A LA TERRE POUR UNE INSTALLATION DE DISTRIBUTION HAUTE TENSION ISOLEE AU GAZ COMPRIME ET BLINDEE

(30) Priorität: 31.03.1992 DE 4211157
(43) Veröffentlichungstag der Anmeldung: 18.01.1995
(73) Patentinhaber: SIEMENS AKTIENGESELLSCHAFT, 80333 München (DE)
(72) Erfinder: PFAFF, Dietrich, D-78137 Karlsruhe (DE); SCHMIDT, Regina, D-13627 Berlin (DE); PIRCHER, Christian, D-13629 Berlin (DE)
(86) Internationale Anmeldenummer: DE9300189
(87) Internationale Veröffentlichungsnummer: WO9320606

(56) Entgegenhaltungen:
- EP-A- 0 100 510
- EP-A- 0 468 300
- DE-U- 8 915 427
- US-A- 4 413 166

## Beschreibung

Die Erfindung bezieht sich auf einen Erdungsschalter für eine druckgasisolierte, metallgekapselte Hochspannungsschaltanlage mit einem gegenüber der geerdeten Kapselung isoliert angeordneten bewegbaren Erdungskontakt und einer bedarfsweise die Isolieranordnung des Erdungskontaktes überbrückenden elektrischen Verbindung.

Derartige, beispielsweise aus der EP-A 0 075 922 bekannte Erdungsschalter, dienen nicht nur zur Übertragung des Erdpotentials auf den Hochspannung führenden Leiter der Schaltanlage, sondern auch während des normalen Betriebs insbesondere außerhalb der Übertragung der elektrischen Energie zu Meßzwecken. Die Isolieranordnung, die für die Funktion der Übertragung des Erdpotentials mit der elektrischen Verbindung überbrückt ist, muß für die Funktion der Messung wirksam sein, das heißt die Überbrückung muß aufgehoben sein.

Ein solcher Erdungsschalter ist jedoch im Bereich der Isolieranordnung durch Vorüberschläge zum bewegbaren Erdungskontakt gefährdet, wenn der Erdungsschalter in die Einschaltlage überführt wird. Im Verlauf der Einschaltbewegung können auf dem Leiter der Anlage noch Ladungen mit erheblichen Spannungen liegen, die kurz vor der galvanischen Berührung des Erdungskontaktes mit dem Leiter schlagartig zu einem Überschlag führen. Durch diesen Überschlag werden transiente Überspannungen hervorgerufen, die die nur für Spannungen von wenigen kV ausgelegte Isolieranordnung überlasten können.

Aus dem Dokument US-A-4,413,166 ist ein Trennschalter bekannt, bei dem in geöffnetem Zustand eine der voneinander getrennten Elektroden zwangsweise galvanisch mit dem Erdpotential verbunden ist.

Aus der EP-A-0 100 510 ist ein Erdungsschalter bekannt, der einen Erdkontakt über einen Widerstand herstellt. Eine vorübergehende direkte Erdung einer Elektrode des Erdungsschalters zum Schutz vor transienten Überspannungen ist dort nicht vorgesehen.

Der Erfindung liegt die Aufgabe zugrunde, Überspannungen infolge von Entladungsvorgängen an der Isolieranordnung und gegebenenfalls eine Beschädigung von daran angeschlossenen Meßgeräten sicher zu vermeiden.

Nach der Erfindung wird diese Aufgabe dadurch gelöst, daß eine zusätzliche, die Isolieranordnung zwangsweise elektrisch überbrückende Kontaktanordnung vorgesehen ist, die den bewegbaren Erdungskontakt außerhalb der Ein- und Ausschaltstellung im Verlauf der Schaltbewegung zwischen diesen beiden Stellungen mit der geerdeten Kapselung verbindet.

Durch Anwendung der Erfindung ist sichergestellt, daß bei aufgehobener elektrischer Verbindung die Isolieranordnung und eine an den Erdungskontakt angeschlossene Meßvorrichtung in einem Bereich der Einschaltbewegung des Erdungskontaktes, in dem Vorüberschläge stattfinden, selbsttätig geschützt ist.

Mit Vorteil ist bei einem ersten Ausführungsbeispiel eines Erdungsschalter nach der Erfindung der bewegbare Erdungskontakt ein auf einer drehbar angetriebenen Welle angeordneter Messerschaltkontakt, der mit einer konzentrisch um die Welle angeordneten Schleifkontaktbahn der Kapselung über einen federnden, quer zur Welle beweglichen Kontakt verbindbar ist.

Bei einer weiteren vorteilhaften Ausführungsform des Erfindungsgedankens ist vorgesehen, daß der bewegbare Erdungskontakt ein geradlinig geführter bewegbarer Schaltstift ist, der mit einer achsparallel verlaufenden Schleifkontaktfläche der Kapselung über einen federnden, quer zum Schaltstift gelagerten Kontakt verbindbar ist.

Anhand der Zeichnung sind zwei Ausführungsbeispiele eines Erdungsschalters für eine druckgasisolierte, metallgekapselte Hochspannungsschaltanlage nach der Erfindung beschrieben und die Wirkungsweise erläutert.

Die Figuren 1 bis 3 zeigen in einem Schnitt schematisch einen Erdungsschalter in drei verschiedenen Stellungen zwischen der Ein- und Ausschaltposition während des Bewegungsablaufes des beweglichen Erdungskontaktes.

Die Figuren 4 und 5 zeigen ein weiteres Ausführungsbeispiel eines Erdungsschalters nach der Erfindung.

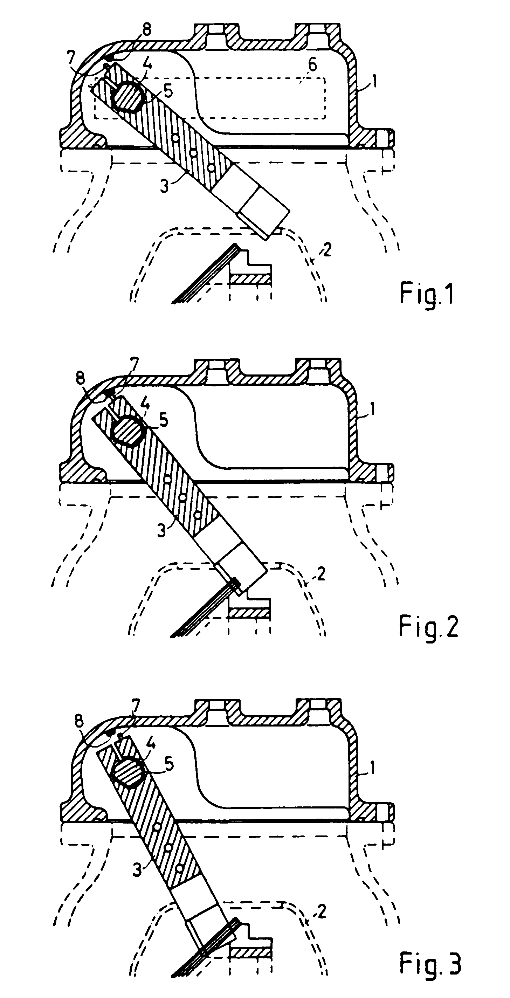

Bei dem in Figur 1 dargestellten Erdungsschalter ist innerhalb der Metallkapselung 1 ein Hochspannung führender Leiter 2 vorgesehen, der mit einem als Messerkontakt 3 ausgeführten Erdungskontakt in galvanischer Verbindung überführbar ist. Hierzu sitzt der Messerkontakt 3 verdrehungssteif auf einer Antriebswelle 4, die von einem außerhalb der geerdeten Kapselung 1 liegenden Antrieb verdrehbar ist. Dieser Antrieb ist der Einfachheit halber nicht weiter dargestellt.

Das die Welle 4 tragende Lager 5 ist mit einer für Spannungen von einigen kV ausgelegten Isolieranordnung versehen, die außerhalb der Kapselung 1 durch ein diese mit der Welle 4 verbindendes flexibles Stromband oder dergleichen überbrückbar ist. Im Verlauf der Einschaltbewegung bewegt sich der Messerkontakt aus der gestrichelt gezeichneten Position 6 (der Ausschaltstellung) in die dargestellte Lage, in der ein federbelasteteter Stift 7 einer zusätzlichen Kontaktanordnung noch nicht mit einer Schleifkontaktbahn 8 in Kontakt gelangt ist.

Bei einer weiteren Überführung des Erdungsschalters in die Einschaltstellung, gelangt der Messerkontakt 3 in die aus Figur 2 ersichtliche Lage, in der der Stift 7 die Schleifkontaktbahn 8 berührt und damit das Erdpotential der Kapselung 1 auf den Messerkontakt 3 zwangsweise überträgt. Damit ist der Messerkontakt 3 zusätzlich zum Bestehen der äußeren elektrischen Verbindung zwischen der Welle 4 und der Kapselung 1 geerdet, so daß in dieser Lage Überspannungen von der Isolieranordnung des Lagers 5 ferngehalten werden.

Wenn der Erdungsschalter weiter in die Einschaltlage bewegt wird, wie die Figur 3 zeigt, gelangt der Messerkontakt 3 mit dem Leiter 2 in galvanische Verbindung. Ersichtlich ist der Stift 7 in dieser Lage außer Eingriff mit der Schleifkontaktbahn 8.

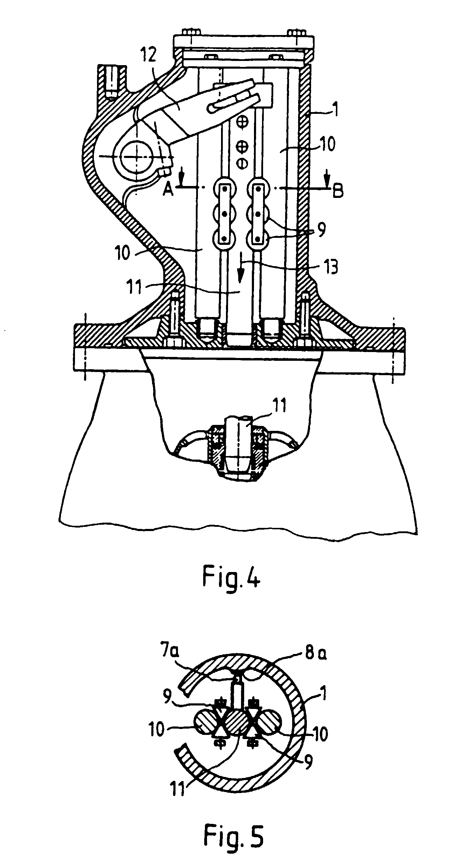

Die Figuren 4 und 5 zeigen in einer teilweise geschnittenen Ansicht und in einem zugehörigen Schnitt ein weiteres Ausführungsbeispiel eines Erdungsschalters nach der Erfindung, bei dem gleiche Teile wie in den Figuren 1 bis 3 mit gleichen Bezugszeichen versehen sind.

Der Erdungskontakt ist ein über Kontaktrollen 9 und Stangenführungen 10 geradlinig geführter Schaltstift 11, der von einem Schwenkhebel 12 betätigbar ist. Dabei zeigt die Figur 4 die Ausschaltposition. Im Verlauf der Schaltbewegung in Pfeilrichtung 13 wird, wie der Schnitt A-B in Figur 5 zeigt, ein quer zum Schaltstift 11 federnd geführter Stift 7a an eine Schleifkontaktfläche 8a angedrückt, so daß zwangsweise das Erdpotential der Kapselung 1 auf den Schaltstift 11 zusätzlich übertragen wird. In der Ein- und Ausschaltstellung berührt der Stift 7a die Schleifkontaktfläche 8a nicht, so daß der Erdungsschalter in dieser Version zu Meßzwecken dienen kann, wenn die nicht weiter dargestellte äußere elektrische Verbindung zwischen der Kapselung 1 und dem Schaltstift 11 zur äußeren Überbrückung der Isolieranordnung aufgehoben ist.

## Patentansprüche

1. Erdungsschalter für eine druckgasisolierte, metallgekapselte Hochspannungsschaltanlage mit einem gegenüber der geerdeten Kapselung (1) isoliert angeordneten, bewegbaren Erdungskontakt (3;11) und einer bedarfsweise die Isolieranordung des Erdungskontaktes (3;11) überbrückenden elektrischen Verbindung,
**dadurch gekennzeichnet**, daß
eine zusätzliche, die Isolieranordnung zwangsweise elektrisch überbrückende Kontaktanordnung (7,8;7a,8a) vorgesehen ist, die den bewegbaren Erdungskontakt (3, 11) außerhalb der Ein- und Ausschaltstellung im Verlauf der Schaltbewegung zwischen diesen beiden Stellungen mit der geerdeten Kapselung (1) verbindet.

2. Erdungsschalter nach Anspruch 1,
**dadurch gekennzeichnet**, daß
der bewegbare Erdungskontakt (3) ein auf einer drehbar angetriebenen Welle (4) angeordneter Messerschaltkontakt (3) ist, der mit einer konzentrisch um die Welle (4) angeordneten Schleifkontaktbahn (8) der Kapselung (1) über einen federnden, quer zur Welle (4) beweglichen Stift (7) verbindbar ist.

3. Erdnungsschalter nach Anspruch 1,
**dadurch gekennzeichnet**, daß
der bewegbare Erdungskontakt ein geradlinig geführter bewegbarer Schaltstift (11) ist, der mit einer achsparallel verlaufenden Schleifkontaktfläche (8a) der Kapselung (1) über einen federnden, quer zum Schaltstift (11) bewegbar gelagerten Stift (7a) verbindbar ist.

## Claims

1. An earthing switch for a compressed gas-insulated, metal-clad, high-voltage switchgear with a movable earthing contact (3; 11), which is arranged so as to be insulated relative to the earthed cladding (1), and an electrical connection which bridges the insulating arrangement of the earthing contact (3; 11) if necessary, characterised in that an additional contact arrangement (7, 8; 7a, 8a) is provided, which forcibly electrically bridges the insulating arrangement and which connects the movable earthing contact (3, 11) with the earthed cladding (1) outside the on and off switching positions during the course of the switching movement between these two positions.

2. An earthing switch according to claim 1,
characterised in that the movable earthing contact (3) is a knife switching contact (3), which is arranged on a rotatably driven shaft (4) and can be connected to sliding contact path (8) of the cladding (1) arranged concentrically around the shaft by means of a resilient pin (7), which is movable transversely to the shaft (4).

3. An earthing switch according to claim 1,
characterised in that the movable earthing contact is a linearly guided, movable switching rod (11), which can be connected to a sliding contact surface (8a) of the cladding (1) extending axially parallel by means of a resilient pin (7a), which is mounted so as to be movable transversely to the switching rod (11).

## Revendications

1. Interrupteur de mise à la terre pour une installation de coupure à haute tension isolée par un gaz sous pression, placée sous enveloppe métallique et comportant un contact mobile de mise à la terre (3;11), qui est disposé en étant isolé par rapport à l'enveloppe (1) raccordée à la terre, et une liaison électrique, qui shunte le cas échéant le dispositif d'isolation du contact de mise à la terre (3;11),
caractérisé en ce que
il est prévu un dispositif à contact supplémentaire (7,8;7a,8a), qui shunte de force, du point de vue électrique, le dispositif d'isolation et qui relie le contact mobile de mise à la terre (3,11) à l'enveloppe (1) raccordée à la terre, en dehors des positions de fermeture et d'ouverture lors du déplacement de commutation entre ces deux positions.

2. Interrupteur de mise à la terre selon la revendication 1,
caractérisé en ce que
le contact mobile de mise à la terre (3) est un contact de coupure à couteau (3), qui est monté sur un arbre (4) entraîné de manière à pouvoir tourner et qui peut être relié à une piste de contact glissant (8) de l'enveloppe (1) disposée concentriquement autour de l'arbre (4), par l'intermédiaire d'une tige élastique (7) mobile transversalement par rapport à l'arbre (4).

3. Interrupteur de mise à la terre selon la
caractérisé en ce que
le contact mobile de mise à la terre est une tige mobile de commutation (11), qui est guidée en ligne droite et qui peut être reliée à une surface de contact glissant (8a), parallèle à l'axe, de l'enveloppe (1) par l'intermédiaire d'une tige élastique (7a), qui est logée de manière à pouvoir être déplaçée transversalement par rapport à la tige de commutation (11). revendication 1,
